# DEMANDE DE BREVET EUROPEEN

(11) **EP 1 207 102 A2**
(43) Date de publication de la demande: **22.05.2002**
(21) Numéro de dépôt: 01402927.6
(22) Date de dépôt: 14.11.2001
(51) Int. Cl.: B64D 17/02, B64C 3/16, B64C 33/00

(54) **Parapente bionique à voilure modulable**

(30) Priorité: 16.11.2000 FR 0014794
(71) Demandeur: Féjan, René, 93120 La Courneuve (FR)
(72) Inventeur: Féjan, René, 93120 La Courneuve (FR)

(57) **Abrégé**

L'invention concerne une série de dispositifs pour une aile de parapente, destinés à l'amélioration des qualités de vol, de pilotage et de sécurité du pilote, qui confèrent à la voilure du parapente les fonctionnalités similaires à celles des oiseaux planeurs. Le parapente selon l'invention comporte une aile (1) dont la voûte est munie d'extrémités de voilure (2) à concavité inversée, et d'une partie centrale (3) invaginée en forme de V. L'aile (1) comporte au bord de fuite une fente entre les tissus extrados (5) et intrados (6). Une commande (11) permet de réduire l'envergure par invagination de la partie centrale. Une commande (20) permet d'augmenter la flèche par plissement du bord de fuite. Deux commandes (34) permettent de moduler la voûte par modification de la longueur du suspentage. Les ouvertures de bord d'attaque sont munies de clapets (39) pour prévenir le dégonflage du parapente.

## Description

La présente invention concerne une série de dispositifs et de modifications pour une aile de parapente, destinés à l'amélioration des qualités de vol, de pilotage et de sécurité du pilote, dans l'ensemble du domaine de vol du parapente. Ces dispositifs et modifications découlent principalement d'une application particulière de la science bionique appliquée au parapente et s'inspirent du modèle des oiseaux planeurs.

La forme structurelle des ailes de parapentes traditionnels emprunte au parachute une voûte continûment concave. Cette forme voûtée entraîne en vol, lors d'une utilisation normale, un écoulement aérodynamique non-optimal, notamment au voisinage de l'extrémité de voilure (dont la concavité vers le bas s'accentue). Ce type de structure contrarie l'écoulement naturel des flux d'air marginaux résultant du nécessaire équilibre des pressions dans cette zone. Il en résulte de ce fait une augmentation de la traînée de l'aile.

La traînée induite d'une aile en phase portante peut, en effet, être caractérisée par le glissement entre les nappes d'écoulements intrados et extrados à leur point de jonction au bord de fuite. Ce glissement résulte d'une composante transverse de ces écoulements (vers l'intérieur à l'extrados et vers l'extérieur à l'intrados), conséquence de l'équilibrage des pressions au voisinage des extrémités (dépression à l'extrados, surpression à l'intrados). Ce phénomène induit un sillage tourbillonnaire déperditeur d'énergie en arrière de l'aile et provoque donc une traînée induite importante. Plus le glissement entre nappes d'écoulement est important, plus sont dégradées les performances de l'aile en vol plané.

Par ailleurs, en cas d'urgence pour échapper par exemple à une zone dangereuse ou de trop forte ascendance, ou encore à de fortes perturbations aérologiques, les parapentes traditionnels disposent de moyens pour assurer au pilote une descente rapide qui malheureusement lui permettent difficilement de concilier à la fois la descente et l'éloignement rapide de la zone dangereuse :
- une première méthode est communément dénommée "faire les oreilles". Elle consiste à réduire la surface de l'aile en repliant les 2 extrémités sous la voilure sous le bord d'attaque à l'aide des suspentes extérieures. La réduction de surface s'accompagne donc d'une augmentation de traînée aérodynamique provoquée par la déformation des extrémités de l'aile. Les qualités de plané dans cette configuration sont fortement dégradées, et ne permettent que difficilement des manoeuvres d'éloignement hors de la zone dangereuse.
- une deuxième méthode consiste à déformer fortement le profil par traction sur la deuxième rangée de suspentes (les B) de l'aile afin d'engager une phase "parachutale" verticale qui a pour effet d'augmenter la vitesse de descente. L'inconvénient de cette méthode est de ne pas permettre l'éloignement efficace d'une zone dangereuse.
- une troisième méthode consiste à exécuter un virage continu, à très forte inclinaison, afin de descendre en spirale. Cette méthode, elle non plus, ne permet pas l'éloignement d'une zone dangereuse. De surcroît, l'augmentation importante du facteur de charge au cours du virage continu peut occasionner une perte de connaissance du pilote. Cette augmentation de facteur de charge entraîne également une sur-sollicitation importante de traction dans les suspentes, pouvant accélérer leur dégradation, voire leur éventuelle rupture en cours de manoeuvre.
Plusieurs cas de décès ont déjà été constatés à la suite de cette manoeuvre, par perte de connaissance du pilote ou rupture totale ou partielle du suspentage.

Le dégonflage partiel ou total du parapente peut parfois survenir dans une zone de fortes turbulences, entraînant sur les parapentes traditionnels une phase de vol communément appelée "fermeture". Cette fermeture est aggravée sur le parapente traditionnel par le fait que les ouvertures aménagées au bord d'attaque pour permettre son gonflage permettent malheureusement aussi son dégonflage.

Enfin, la fabrication traditionnelle des parapentes comprend deux surfaces, intrados et extrados, qui s'étendent du bord d'attaque au bord de fuite. Des intercaissons ou nervures, dans le sens de la corde, permettent de solidariser à une largeur variable ces deux surfaces d'un bout à l'autre de l'envergure.

Ce type de fabrication occasionne un surcroît de métrage de tissu et de temps de montage, qui augmentent notoirement les coûts de fabrication.

D'une manière générale, les parapentes traditionnels sont affectés d'un certain nombre de défauts, en raison d'une forme globale dont l'optimisation laisse persister continuellement des dysfonctionnements dans l'écoulement aérodynamique. Ils altèrent les performances de ce type de parapente aux capacités limitées et compromettent dans une certaine mesure la sécurité des pilotes sujet à des fermetures d'aile difficilement prévisibles.

Pour résoudre ce type d'anomalies, la série de dispositifs et de modifications, selon l'invention, découle d'une application particulière des principes de la science bionique, préconisant l'application technologique des solutions optimales élaborées au cours de l'évolution naturelle des espèces vivantes.

Le modèle vivant utilisé pour l'élaboration des dispositifs selon l'invention, est celui des oiseaux planeurs, dont la forme optimale de la voilure est très différente de la forme des parapentes traditionnels. Ces oiseaux disposent d'autre part de moyens leur permettant de modifier dans une large mesure leurs qualités de vol par adaptation de leur voilure :
- réduction de la surface portante dans le sens de l'envergure par le repliement de leurs ailes vers le haut, en augmentant le dièdre à la naissance des ailes. Les oiseaux utilisent notamment cette configuration pour modifier le plané lors de l'atterrissage, en augmentant leur vitesse de descente.
- augmentation de la flèche par repliement des extrémités de leurs ailes vers l'arrière. Cette configuration occasionne le recul du centre de poussée de la voilure (point d'application de la portance) par rapport au centre de gravité et induit donc une tendance à piquer. Les rapaces utilisent notamment cette configuration afin d'augmenter leur vitesse de plané pour la chasse ou pour fuir un danger.
- modification de la concavité et du dièdre des ailes, qui permet à l'oiseau d'adapter finement les qualités de plané en fonction des conditions aérologiques.

Ces différentes caractéristiques naturelles des oiseaux planeurs constituent le référent bionique pour la conception du parapente selon l'invention.

Un des buts de l'invention est d'améliorer les caractéristiques de plané du parapente, par diminution de la traînée induite.

A cet effet, une première caractéristique, selon l'invention, consiste à adopter pour la réalisation du parapente une forme tridimensionnelle similaire à celle des grands oiseaux planeurs, principalement par l'adoption d'une forme de voûte comprenant l'un au moins des éléments suivants :
- les extrémités de voilure dont la concavité est inversée par rapport à la voûte traditionnelle d'un parapente. Les extrémités de l'aile sont donc orientées vers le haut. Cette forme particulière permet de diminuer le glissement entre les nappes d'écoulement intrados et extrados lorsqu'elles se rejoignent au bord de fuite de l'aile, et donc de réduire de manière importante la traînée induite par la portance de l'aile.
- une zone centrale de voilure invaginée en forme de V.

Cette forme tridimensionnelle est calculée de telle sorte que dans l'ensemble du domaine d'utilisation, la totalité des efforts dans la structure du parapente (efforts de tension dans le tissu, de tension dans les suspentes), résultant des efforts aérodynamiques, inertiels, et de la pression interne, respectent une condition d'équilibre tendant à conserver au parapente sa forme initiale. Cette condition d'équilibre peut s'énoncer simplement par la propriété que tous les efforts de tension dans la structure doivent être positifs (suspentes et tissu tendus). Dans le cas contraire, du fait qu'aucun des constituants du parapente (tissus et suspentes) ne possède de résistance à la compression, un repliement partiel ou total de la structure est inévitable.

Dans le même but d'amélioration des performances en plané, une deuxième caractéristique, selon l'invention consiste à aménager, sur tout ou partie du bord de fuite de l'aile, une ouverture, afin d'établir un écoulement entre le volume interne de l'aile et l'extérieur sous forme d'un jet aérodynamique au niveau du point de jonction entre les nappes d'écoulement intrados et extrados. L'accélération de ce jet aérodynamique sous forme de venturi entre les deux nappes d'écoulement permet une importante réduction de traînée, en diminuant considérablement l'intensité des tourbillons au bord de fuite.

Selon une variante , un autre but de l'invention est de diminuer globalement les coûts de fabrication du parapente, par réduction du le métrage de tissu nécessaire à sa fabrication, et de la durée des opérations de montage.

A cet effet, une troisième caractéristique, selon l'invention, consiste à réduire la largeur de la zone de double surface dans le sens de la corde, sur tout ou partie de l'envergure, dans le but de réduire les temps et les coûts de fabrication, sans altérer pour autant les qualités de vol. Le profil obtenu comporte une double surface dans sa partie avant (bord d'attaque) et une simple surface dans sa partie arrière (bord de fuite).

Un autre but de l'invention est d'améliorer la sécurité du pilote et le pilotage du parapente en augmentant son domaine de vol, notamment en cas de danger ou en cas de vol en zone turbulente, en fournissant au pilote les moyens de descendre rapidement ou d'augmenter sa vitesse, sans augmentation importante de traînée.

A cet effet, une quatrième caractéristique, selon l'invention, consiste à améliorer la descente accélérée du parapente. Elle consiste à installer en partie médiane de l'aile une commande de traction verticale dans le but de diminuer la surface portante dans le sens de l'envergure, par l'accentuation de l'invagination centrale initiale.

Dans le même but, une cinquième caractéristique, selon l'invention, vise à augmenter la vitesse de vol. Elle consiste à augmenter la flèche de la voile en repliant les extrémités de voilure par une commande de traction destinée à plisser de chaque coté une fraction du bord de fuite de l'aile.

Un autre but de l'invention de permettre au pilote d'ajuster finement les qualités de plané du parapente en fonction des condition aérologiques.

A cet effet, une sixième caractéristique, selon l'invention, consiste à faire varier la voûte du parapente à l'aide d'une variation des longueurs de suspentes des extrémités de voilure, dans le but d'établir différents régimes de plané.

Un autre but de l'invention est d'améliorer la sécurité du pilote du parapente en diminuant au maximum les risques et l'amplitude d'éventuelles fermetures du parapente.

A cet effet, une septième caractéristique , selon l'invention, est destinée à rigidifier l'aile en préservant au maximum la pression interne lors d'une amorce de dégonflage au cours d'une fermeture partielle ou totale de l'aile. Elle consiste à disposer derrière les entrées d'air un système de clapets constitué de deux ou plusieurs bandes de tissu horizontales en chevauchement en 'écailles de poisson' derrière une résille à quadrillage large.

Enfin, selon une variante, un autre but de l'invention est d'améliorer les qualités de vol du parapente par diminution de la traînée du suspentage.

A cet effet, une dernière caractéristique, selon l'invention, est de diminuer considérablement le nombre de suspentes les plus basses, dites "principales", par regroupement important des suspentes hautes dans le sens de la corde.

Les dessins annexés illustrent les différentes caractéristiques de l'invention :
- La figure 1 représente, en vue de face, le parapente bionique selon l'invention.
- La figure 2 représente en perspective une zone courante du parapente selon l'invention, figurant le dispositif d'ouverture au bord de fuite.

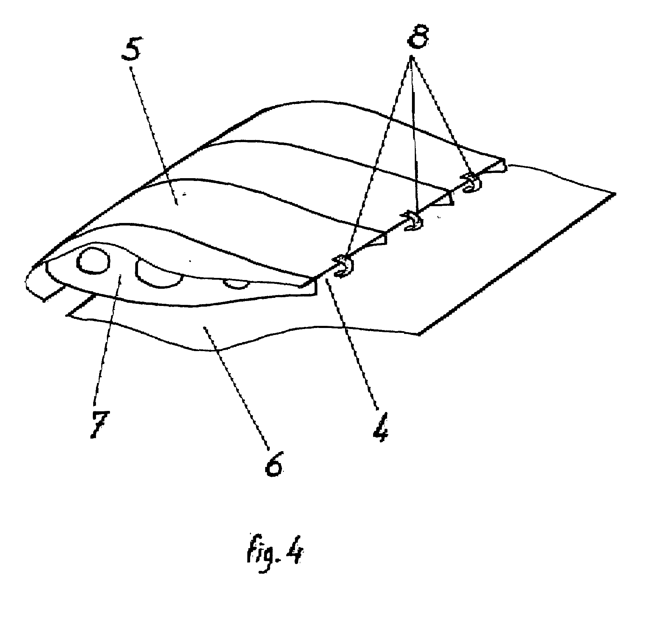

- La figure 3 représente en perspective une variante de fabrication du dispositif d'ouverture au bord de fuite.
- La figure 4 représente en perspective une variante de fabrication du parapente selon l'invention, utilisant un profil à double surface partielle (2/3 double surface, 1/3 simple surface.

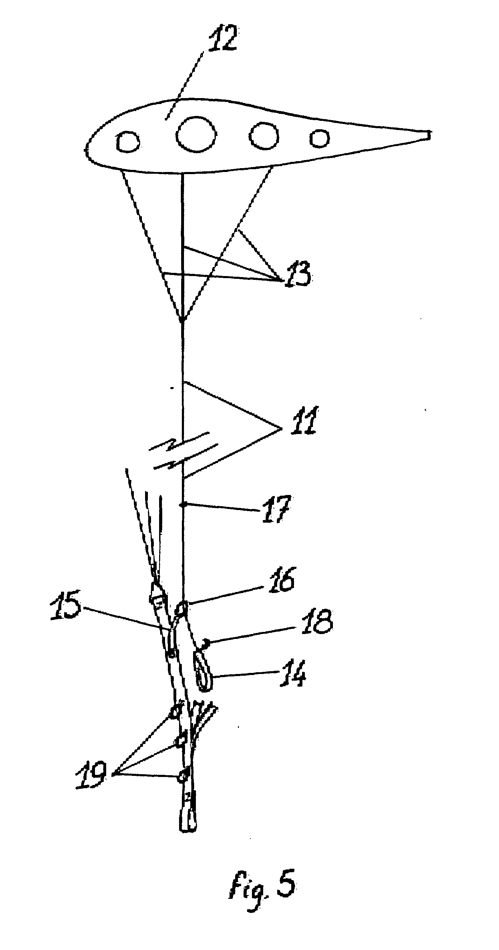

- La figure 5 représente de profil le dispositif de réduction de surface de voilure par invagination centrale.
- La figure 6 représente en perspective le fonctionnement du dispositif de réduction de surface par invagination lors de la réduction d'envergure.
- La figure 7 représente en perspective le fonctionnement du dispositif de réduction de surface par invagination lors du retour à la forme initiale du parapente selon l'invention.

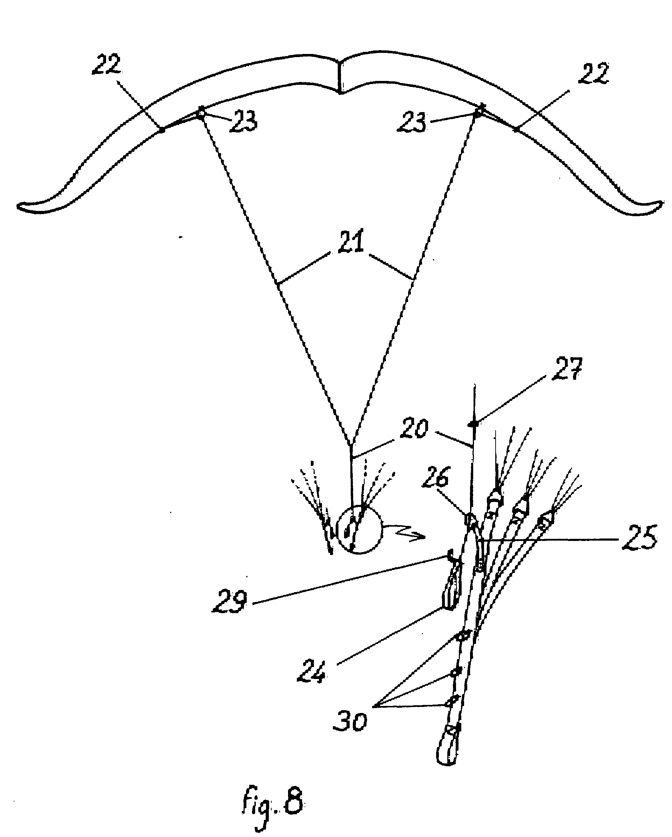

- La figure 8 représente en vue arrière le dispositif de variation de la flèche des extrémités de voilure selon l'invention.
- La figure 9 représente en vue de dessus le fonctionnement du dispositif de variation de la flèche des extrémités de voilure.
- La figure 10 représente en vue de face le dispositif de variation de la voûte des extrémités de voilure.
- La figure 11 représente en vue de profil l'un des groupes d'élévateurs droit ou gauche, muni de la commande du dispositif de variation de la voûte des extrémités de voilure, ladite commande étant totalement relâchée.
- La figure 12 représente en vue de profil le même groupe d'élévateurs droit ou gauche, muni de la commande du dispositif de variation de la voûte des extrémités de voilure, ladite commande étant en position actionnée.
- La figure 13 représente en perspective le dispositif de clapets installé sur chacune des ouvertures des caissons du parapente selon l'invention.
- La figure 14 représente le fonctionnement du dispositif de clapets lors du gonflage du parapente selon l'invention.
- La figure 15 représente le fonctionnement du dispositif de clapets lors d'une amorce de dégonflage du parapente selon l'invention.
- La figure 16 représente en coupe le suspentage d'un parapente traditionnel dans le sens de la corde.
- La figure 17 représente en coupe une variante de suspentage selon l'invention dans le sens de la corde, qui permet de diminuer la traînée du suspentage.
- La figure 18 représente en perspective le parapente bionique selon l'invention muni de cette variante de suspentage.
- La figure 19 représente en coupe une seconde variante de suspentage selon l'invention dans le sens de la corde, qui permet le montage d'un système traditionnel d'accélérateur.
- Enfin, la figure 20 représente en perspective le parapente bionique selon l'invention muni de cette seconde variante de suspentage dans le sens de la corde.

En référence à ces dessins, l'aile de parapente *(1)* selon l'invention comporte des extrémités *(2)* à concavité inversée, ainsi qu'une zone centrale *(3)* invaginée en forme de *V*.

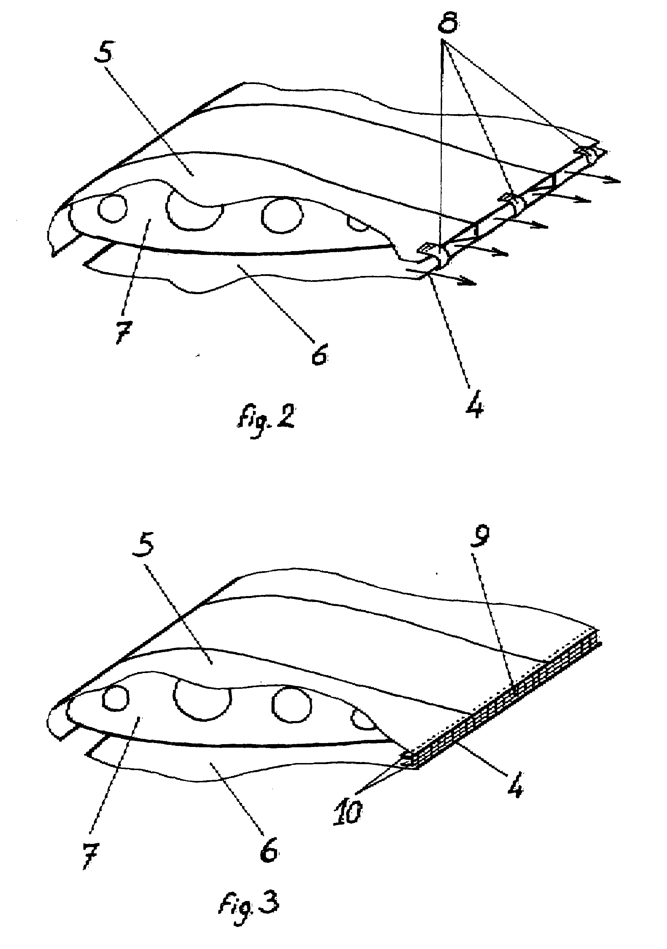

Par construction, et comme représenté sur la figure 2, une ouverture *(4)* est ménagée sur tout ou partie du bord de fuite du parapente entre le tissu d'extrados *(5)* et le tissu d'intrados *(6),* afin d'obtenir une fente d'épaisseur 3 à 15 mm. Cette fente dans le sens de l'envergure permet l'écoulement d'un flux d'air représenté par les flèches sur la figure 2. Selon une forme particulière de réalisation, l'épaisseur de cette fente *(4)* peut être maintenue à l'aide d'une ou plusieurs brides en tissu *(8)* cousues ou fixées par un autre moyen éventuellement réglable (par exemple un morceau de bande Velcro) en partie médiane de chaque fente, entre deux nervures *(7).* Selon une autre forme particulière de réalisation, l'épaisseur de cette fente *(4)* peut être maintenue à l'aide d'un tissu résille à mailles larges *(9)* cousue ou fixée par un autre moyen éventuellement réglable (par exemple deux bandes Velcro *(10)* cousues à l'intérieur des tissus extrados *(5)* et intrados *(6)*). Avantageusement, la largeur des mailles du tissu résille peut être choisie de l'ordre de grandeur de l'épaisseur de la fente afin de perturber au minimum l'écoulement par ladite fente.

Selon une variante destinée à réduire globalement les coûts de fabrication, la corde du profil du parapente peut être divisée en deux parties avant et arrière. La partie avant est de construction traditionnelle mais de corde moins large que la corde totale du profil. Elle est formée de nervures *(7),* extrados *(5),* et intrados *(6).* La partie arrière n'est constituée que d'une surface de tissu, réalisée dans la même pièce, soit de l'extrados *(5),* soit de l'intrados *(6).* Dans cette variante la fente *(4)* est déplacée entre les parties avant et arrière au dessus ou au dessous de la partie arrière.

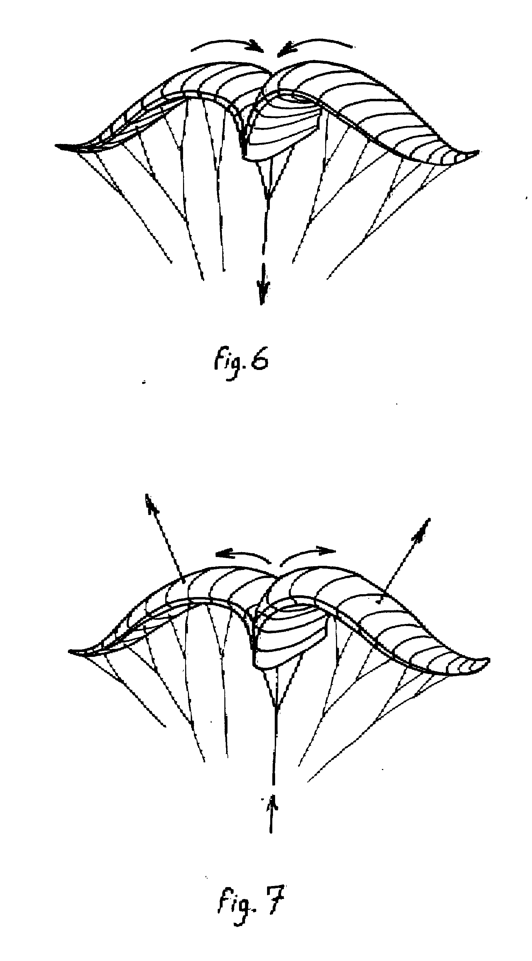

Avantageusement, un dispositif de descente rapide par augmentation de l'invagination centrale à l'aide d'une suspente *(11)* est installé sur la nervure centrale *(12)*.Selon une forme particulière de réalisation, cette suspente est ramifiée en patte d'oie *(13),* par 3 ou plusieurs suspentes ramifiées pour sa fixation sur la nervure *(12),* et accessible au pilote par une poignée *(14)* reliée à l'un des élévateurs, par l'intermédiaire d'une bride en tissu *(15)* cousue sur l'élévateur et terminée par un anneau ou une poulie *(16)* permettant le coulissement libre de la commande de descente jusqu'à une butée de course de sécurité *(17).* Une traction vers le bas du pilote sur la poignée *(14),* d'une amplitude réglable par le pilote, permet par l'intermédiaire de la suspente *(11)* de descendre la nervure centrale *(12)* d'une hauteur égale à l'amplitude de la traction, limitée par la butée *(17)* à une course de 80 à 100 cm. La descente de la nervure *(12)* permet d'accentuer l'invagination centrale de la voûte et de réduire l'envergure de chaque aile d'une longueur sensiblement égale à l'amplitude de la traction, selon le schéma représenté sur la figure 6. Lorsque le pilote relâche la poignée *(14),* la portance aérodynamique des ailes tend à produire le mouvement inverse et à redonner au parapente sa forme initiale, selon le schéma de la figure 7. Afin de laisser au pilote la liberté de mouvement de ses bras pour le pilotage traditionnel du parapente au cours de la manoeuvre de descente, un système d'accrochage provisoire peut être installé entre la poignée *(14)* et une partie fixe au niveau du pilote, par exemple les élévateurs ou le harnais. Un crochet *(18),* partie "mâle" de ce système d'accrochage est par exemple fixé sur la poignée *(14),* par exemple par couture. Un ou plusieurs anneaux *(19),* partie "femelle" de ce système sont fixés sur les élévateurs et/ou sur le harnais, de telle sorte que l'accrochage par le pilote de la poignée *(14)* sur l'un des anneaux *(19)* lui permette de maintenir le parapente dans une configuration particulière de descente tout en lui laissant sa liberté de mouvement. Le décrochage de la poignée *(14)* permet au pilote de reprendre le contrôle de la commande de descente *(11).*

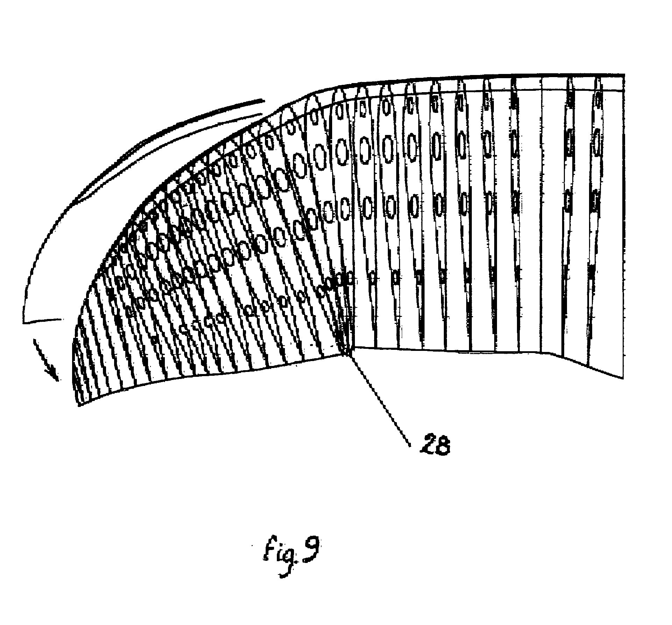

Avantageusement, un autre dispositif de descente rapide par augmentation de la flèche à l'aide d'une suspente *(20)* divisée en deux parties *(21)* est installé au bord de fuite de l'aile. Selon une forme particulière de réalisation, chaque suspente *(21)* est fixée par couture en *(22)* sur le bord de fuite de l'aile et passe au travers d'un anneau ou poulie *(23)* lui-même fixé par couture au bord de fuite de l'aile. La suspente *(20)* est accessible au pilote par une poignée *(24)* reliée à l'un des élévateurs (par commodité et pour séparer les différentes commandes du parapente, l'élévateur choisi pour l'installation de la poignée *(24)* est choisi du côté opposé à celui recevant l'installation de la poignée *(14)*), par l'intermédiaire d'une bride en tissu *(25)* cousue sur l'élévateur et terminée par un anneau ou une poulie *(26)* permettant le coulissement libre de la suspente *(20)* jusqu'à une butée de course de sécurité *(27).* Une traction du pilote sur la poignée *(23),* d'une amplitude réglable par le pilote, permet par l'intermédiaire de la suspente *(20)* la traction sur chaque suspente *(21)* et ramène le point *(22)* sur l'anneau ou poulie *(23),* ce qui permet le plissage *(28)* du bord de fuite de l'aile et provoque le repliement des parties externes vers l'arrière, selon le schéma de la figure 9. Lorsque le pilote relâche la poignée *(24),* la pression interne du parapente tend à redonner à celui ci sa forme initiale. Afin de laisser au pilote la liberté de mouvement de ses bras pour le pilotage traditionnel du parapente au cours de la manoeuvre de descente , un système d'accrochage provisoire peut être installé entre la poignée *(24)* et une partie fixe au niveau du pilote, par exemple les élévateurs ou le harnais. Un crochet *(29),* partie "mâle" de ce système d'accrochage est par exemple fixé sur la poignée *(24),* par exemple par couture. Un ou plusieurs anneaux *(30),* partie "femelle" de ce système sont fixés sur les élévateurs et/ou sur le harnais, de telle sorte que l'accrochage par le pilote de la poignée *(24)* sur l'un des anneaux *(30)* lui permette de maintenir le parapente dans une configuration particulière de descente tout en lui laissant sa liberté de mouvement. Le décrochage de la poignée *(24)* permet au pilote de reprendre le contrôle de la commande de descente *(20).*

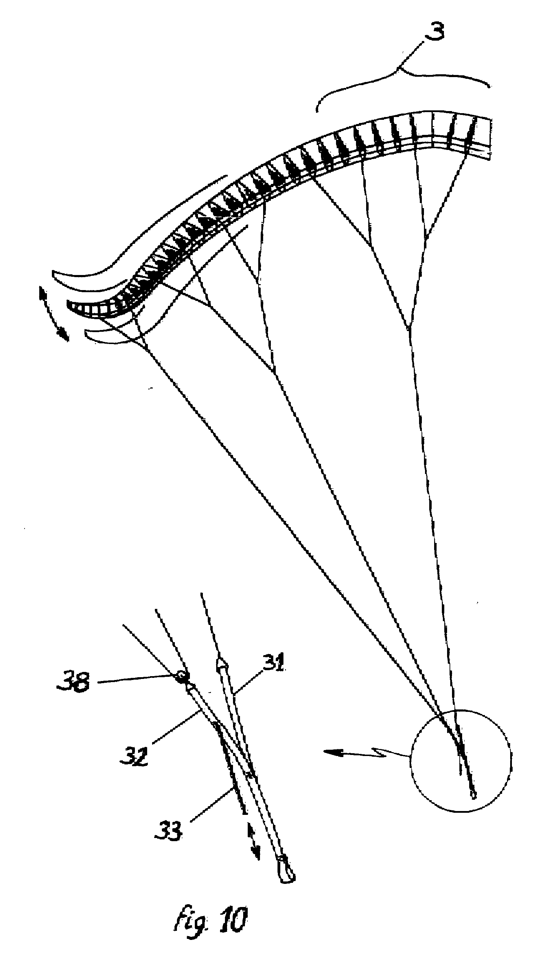

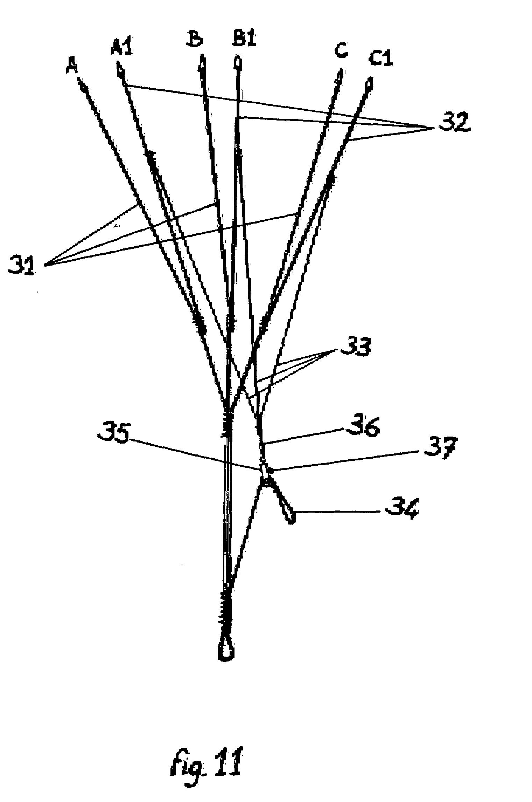

Avantageusement, un dispositif de modification de la voûte des extrémités de voilure est installé sur le parapente. Selon une forme particulière de réalisation, chacun des élévateurs de chaque côté du parapente est divisé en deux parties, comme représenté sur la figure 10. Une première partie *(31)* supporte un groupe de suspentes soutenant la zone centrale *(3)* du parapente, et une seconde partie *(32)* supporte un groupe de suspentes soutenant le reste de l'aile. Sur la partie d'élévateur *(32)* est cousue une cordelette *(33)* permettant par traction de faire varier la longueur de cette partie d'élévateur. La variation de longueur de la partie d'élévateur *(32)* permet de faire varier la voûte de l'extrémité d'aile soutenue par cette partie d'élévateur. Avantageusement, la boucle d'attache, sur chaque partie d'élévateur *(32),* des suspentes de la partie d'aile à voûte variable peut être remplacée par une poulie *(38),* destinée à équilibrer automatiquement les longueurs des suspentes lors de la variation de la voûte. Bien entendu, pour ne pas faire varier l'assiette, tous les élévateurs dans le sens de la corde de chaque côté du parapente doivent être munis d'une cordelette *(33).* Toutes les cordelettes doivent être commandées par une commande unique *(34)* de chaque côté du parapente, comme l'indique la figure 11, sur laquelle est représenté le cas particulier par exemple d'un groupe d'élévateurs à trois branches, traditionnellement appelées A, B, C. Dans le cas du parapente selon l'invention, les parties d'élévateur *(32)* destinées à la variation de voûte sont appelées A1, B1, C1.

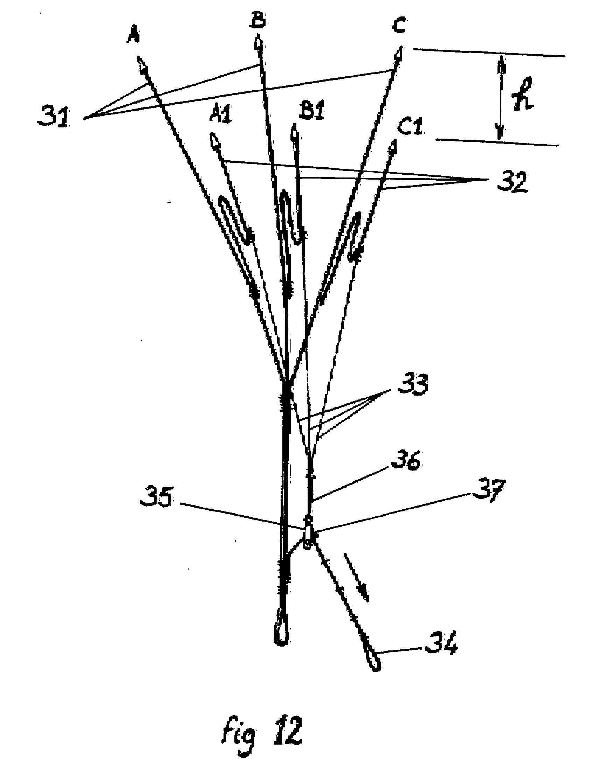

De chaque coté du parapente, la commande unique *(34)* est constituée d'une sangle cousue sur la base du groupe d'élévateurs et passant au travers d'une boucle de sangle à verrou traditionnelle *(35),* elle même reliée aux trois cordelettes *(33)* de chaque élévateur par l'intermédiaire d'une sangle *(36).* Un système de blocage *(37)* sur la boucle de sangle *(35)* permet le déverrouillage de la commande *(34).* Comme l'indique la figure 12, une traction sur la commande *(34)* permet la commande simultanée de chaque partie d'élévateur *(32)* A1, B1, et C1. La descente à la même hauteur "h" des boucles d'attache des suspentes en A1, B1, et C1 garantit la variation de voûte de l'aile sans variation d'assiette du profil. Avantageusement, la commande *(34)* peut être munie de repères pour le réglage de la voûte dans des positions prédéterminées.

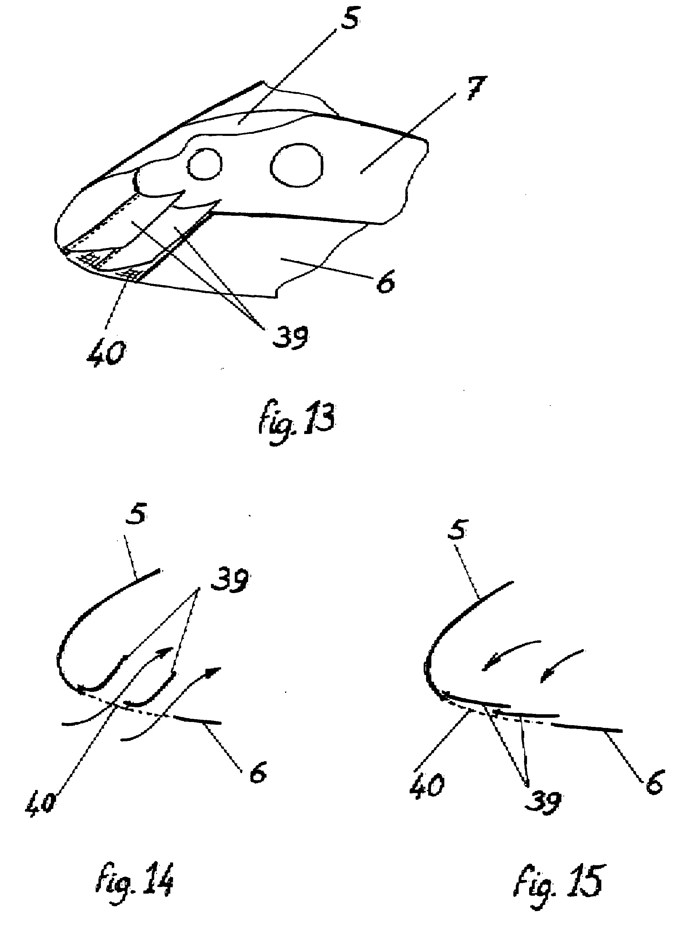

Avantageusement, un système de deux ou plusieurs clapets *(39)* se recouvrant partiellement est installé derrière chaque ouverture de bord d'attaque des caissons constitués par les nervures *(7),* l'extrados *(5)* et l'intrados *(6)* afin d'éviter le dégonflage total ou partiel du parapente. Selon une forme particulière de réalisation représentée sur la figure 13, un tissu résille à mailles larges *(40)* est cousu dans chaque ouverture. Les clapets *(39)* sont formés de tissu similaire à celui des autres parties du parapente et adoptent une forme rectangulaire de longueur égale à la largeur de l'ouverture (dans le sens de l'envergure) et de hauteur de 4 à 6 cm. Ils sont cousus sur le tissu résille *(40)* par un seul côté (le plus en avant par rapport au flux d'air entrant), l'autre côté restant libre et recouvrant au repos la couture du clapet suivant, selon un étagement en "écailles de poisson". Le premier clapet est cousu au début de l'ouverture. Le dernier clapet recouvre la fin de l'ouverture. Ces clapets permettent lors du décollage un gonflage rapide du parapente similaire à celui d'un parapente traditionnel, le flux d'air entrant n'étant alors pas perturbé par les clapets qui sont ouverts, selon le mécanisme représenté sur la figure 14. En vol, lors d'une amorce de dégonflage partiel ou total du parapente, la diminution du volume interne tend à faire augmenter la pression à l'intérieur du parapente et provoque une tendance de reflux d'air par les ouvertures de bord d'attaque. Cette tendance de reflux d'air provoque instantanément la fermeture des clapets *(39)* contre le tissu résille *(40),* selon le mécanisme représenté sur la figure 15, ce qui empêche le dégonflage du parapente.

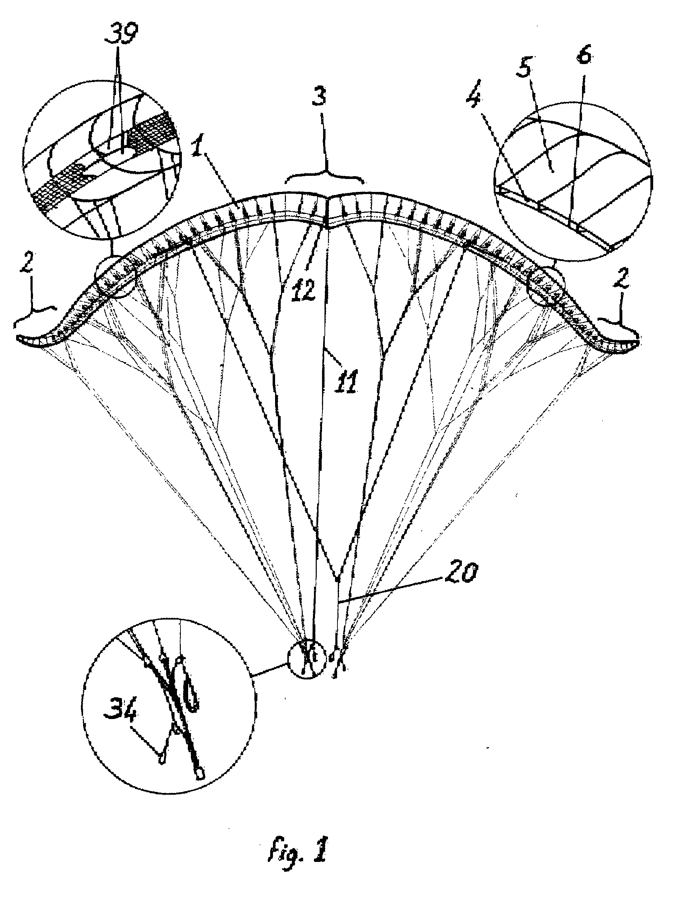

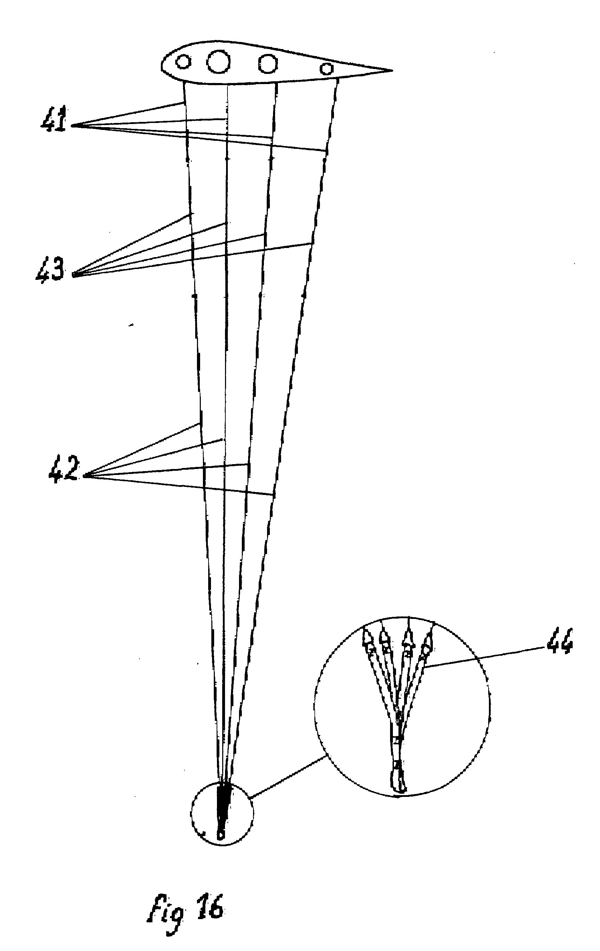

Selon une variante destinée à réduire considérablement le métrage du suspentage, le regroupement des suspentes hautes, peut être réalisé dans le sens de la corde. La figure 16 montre en effet le suspentage d'un parapente traditionnel dans le sens de la corde. Selon ce suspentage traditionnel, chaque suspente haute *(41)* dans le sens de la corde, par exemple au nombre de 4 comme sur la figure (et appelées traditionnellement A, B, C, D), est reliée à une suspente basse *(42),* éventuellement par des suspentes intermédiaires *(43).* Dans le sens de l'envergure, le suspentage traditionnel est en général ramifié comme le montre par exemple la figure 1. Selon ce suspentage traditionnel, le nombre d'élévateurs *(44)* est en général égal au nombre de points d'attache sur la nervure.

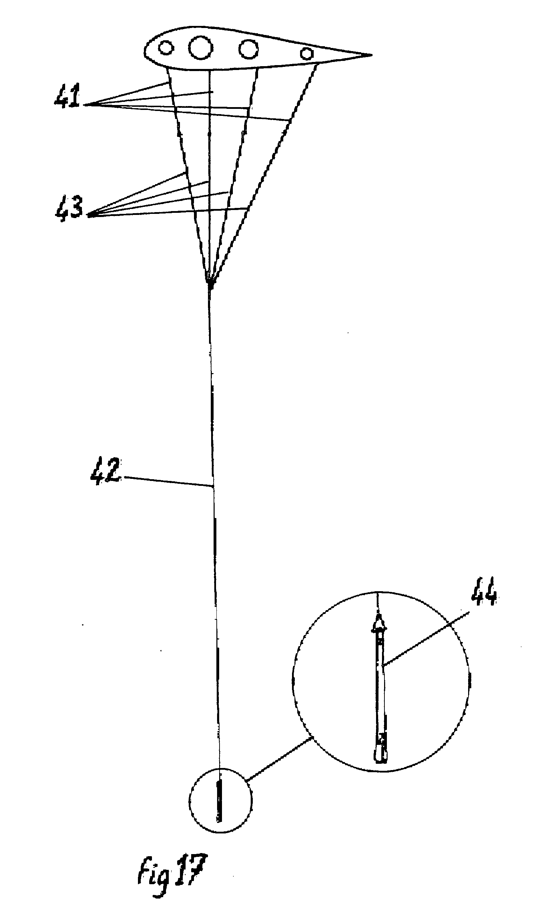

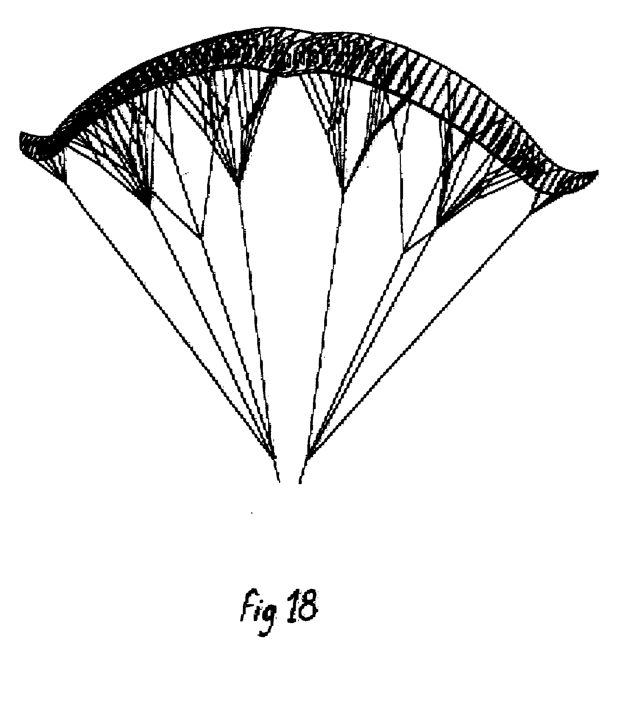

La figure 17 montre une première variante de suspentage selon l'invention, pour laquelle toutes les suspentes hautes *(41)* et intermédiaires *(43)* sont regroupées sur une seule suspente basse dans le sens de la corde. Ce regroupement divise par 4 le nombre de suspentes basses *(42),* ainsi que le nombre d'élévateurs *(44).* Le parapente selon cette variante ne comporte qu'un seul élévateur par côté, comme le représente en perspective la figure 18.

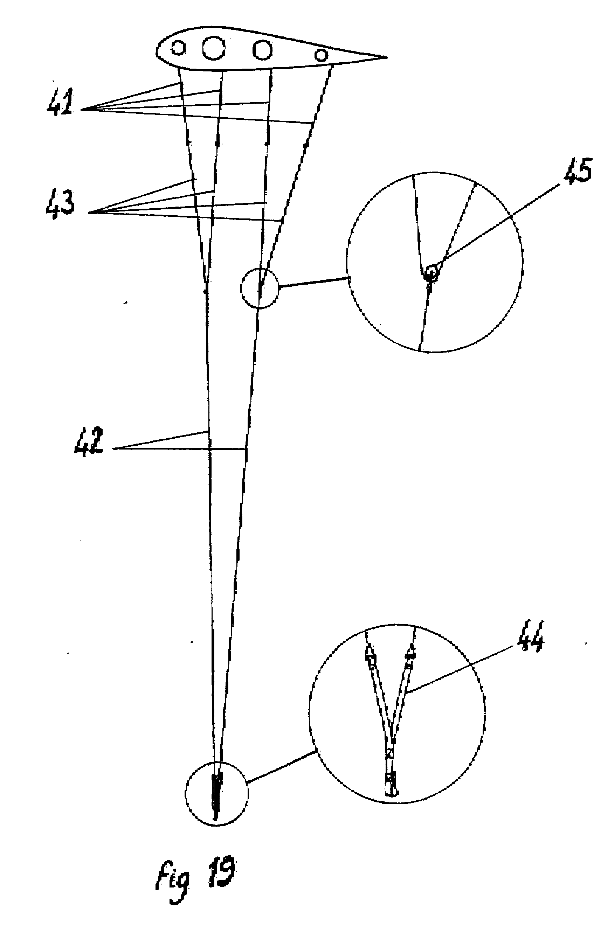

La figure 19 montre une seconde variante de suspentage selon l'invention, pour laquelle les suspentes hautes *(41)* et intermédiaires *(43)* sont cette fois regroupées deux à deux. Ce regroupement permet de diviser par 2 le nombre de suspentes basses *(42),* ainsi que le nombre d'élévateurs *(44)*.

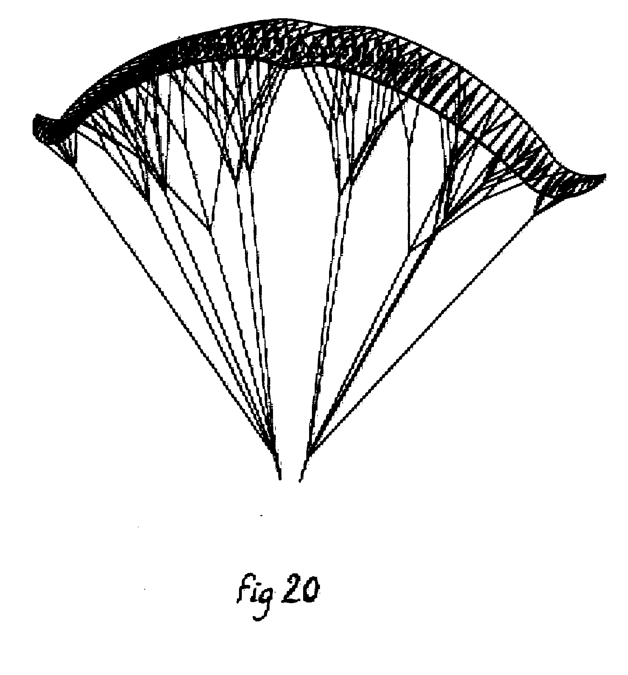

Le parapente selon cette variante comporte 2 élévateurs par côté, comme le représente la figure 20. Cette variante permet de plus l'installation d'un système traditionnel d'accélération par variation d'assiette par traction sur l'élévateur avant et/ou relâchement de l'élévateur arrière. Afin d'équilibrer les longueurs de suspentes et pour déformer au minimum le profil du parapente lors de la variation d'assiette, des poulies *(45)* peuvent avantageusement être installées aux points de regroupement des suspentes intermédiaires *(43).*

Afin de réduire au maximum les coûts de fabrication industrielle, l'ensemble des dispositifs décrits ci-dessus est avantageusement constitué de matériaux entrant dans la fabrication traditionnelle des parapentes. Ainsi, les différentes commandes coulissantes sont constituées de cordelettes similaires à celles utilisées pour les commandes de freins traditionnelles, les différentes suspentes sont constituées de matériaux traditionnels, ainsi que le tissu du parapente et les différentes sangles, crochets, poignées ou boucles de sangles.

Comme il va de soi, l'invention n'est pas limitée aux seules méthodes de fabrication décrites ci-dessus. Ainsi, la courbure des extrémités de voilure, et la forme de la partie centrale de voilure peuvent être plus ou moins prononcées que celles représentées sur la figure 1, les moyens de maintien de la fente *(4),* les moyens de réglage des différentes commandes *(14), (24)* et *(34),* peuvent être différents des moyens décrits, le nombre des élévateurs peut être différent de celui représenté sur les figures 11 et 12. D'une manière générale, toute modification mineure des dispositifs selon l'invention sans incidence sur leur fonctionnement est réalisable.

Enfin, il va de soi que chacun des dispositifs selon l'invention est applicable aux structures similaires à celle d'un parapente, constitués d'une aile gonflée par la pression dynamique en vol et maintenue en forme par un ensemble de nervures et de suspentes, tels par exemple les parachutes de saut, de largages de charges diverses ou de récupération ou de sauvetage de personnes ou d'aéronefs.

## Revendications

1. Aile de parapente ou de parachute, dont la voilure est **caractérisée par** une voûte vue de face en forme d'aile d'oiseau *(1),* comprenant des extrémités d'aile *(2)* dont la concavité est orientée vers le haut, et une partie centrale de voilure *(3)* invaginée en forme de V.

2. Aile de parapente ou de parachute, **caractérisée en ce qu'**une fente *(4)* est ménagée sur tout ou partie du bord de fuite entre le tissu d'extrados *(5)* et le tissu d'intrados *(6)*.

3. Aile de parapente ou de parachute, **caractérisée en ce qu'**elle comporte une commande *(11),* de descente par diminution de l'envergure, ladite commande agissant en traction vers le bas sur la partie centrale de l'aile *(12),* afin de réduire l'envergure de ladite aile par invagination de la partie centrale.

4. Aile de parapente ou de parachute, **caractérisée en ce qu'**elle comporte une commande *(20),* d'augmentation de vitesse par modification de flèche, ladite commande agissant par plissage sur une partie *(28)* du bord de fuite de l'aile, par l'intermédiaire d'une suspente coulissante *(21),* afin d'augmenter la flèche des extrémités de ladite aile.

5. Aile de parapente ou de parachute selon les revendications 3 ou 4, **caractérisée en ce que** les commandes *(11), (20)* sont actionnées par des poignées *(14), (24)* réglables par le pilote sur une ou plusieurs positions fixes provisoires, à l'aide de systèmes d'attaches *(18)-(19), (29) - (30).*

6. Aile de parapente ou de parachute, **caractérisée en ce qu'**elle est munie d'un profil dont la partie avant est de construction traditionnelle formée de nervures *(7),* d'un extrados *(5)* et d'un intrados *(6),* et dont la partie arrière n'est constituée que d'une surface de tissu, ladite surface étant constituée par le prolongement de la pièce de tissu constituant, soit ledit extrados *(5),* soit ledit intrados *(6)*.

7. Aile de parapente, **caractérisée en ce qu'**elle comporte une série de commandes *(33)* installées sur une partie *(32)* de chacun des élévateurs de chaque côté du parapente, ladite partie *(32)* regroupant les suspentes soutenant l'extrémité de l'aile, lesdites commandes *(33)* permettant de modifier la voûte de l'aile par modification de hauteur desdites parties d'élévateur *(32)*.

8. Aile de parapente ou de parachute selon la revendication 7 , **caractérisée en ce que** l'ensemble des commandes *(33)* de chaque groupe d'élévateurs de chaque côté du parapente sont actionnées par une commande unique réglable *(34),* installée sur chacun des groupes d'élévateurs.

9. Aile de parapente ou de parachute, **caractérisée en ce que** chaque ouverture de chacun des caissons constitutifs de l'aile est munie d'un dispositif de clapets en tissu *(39),* lesdits clapets étant cousus en recouvrement partiel derrière une résille *(40),* ladite résille étant elle-même cousue sur le pourtour de ladite ouverture.

10. Aile de parapente ou de parachute, **caractérisée en ce que** tout ou partie des suspentes hautes *(41)* et intermédiaires *(43)* sont regroupées dans le sens de la corde sur une ou deux suspentes basses *(42),* lesdites suspentes basses pouvant être munies de poulies *(45),* notamment en cas d'usage d'un système traditionnel d'accélération par traction et/ou relâchement des élévateurs.
